# EUROPÄISCHE PATENTANMELDUNG

(11) **EP 3 641 227 A1**
(43) Veröffentlichungstag der Anmeldung: **22.04.2020**
(21) Anmeldenummer: 18000818.7
(22) Anmeldetag: 19.10.2018
(51) Int. Cl.: H04L 12/28

(54) **ANORDNUNG VON MEHREREN GLEICHARTIGEN TECHNISCHEN GERÄTEN UND STEUERUNG FÜR TECHNISCHE GERÄTE**

(71) Anmelder: Diehl AKO Stiftung & Co. KG, 88239 Wangen (DE)
(72) Erfinder: Riedle, Andreas, DE - 88299 Leutkirch (Herlazhofen) (DE)
(74) Vertreter: Diehl Patentabteilung

(57) **Zusammenfassung**

In einer Anordnung von mehreren gleichartigen technischen Geräten (10) wie beispielsweise Kühl- und/oder Gefriergeräten, die jeweils wenigstens ein Aggregat (12, 14) und eine Steuerung (16) zum Ansteuern und Überwachen des wenigstens einen Aggregats (12, 14) aufweisen, haben die Steuerungen (16) der Geräte (10) jeweils eine Schnittstelle (18) zum Senden und Empfangen von Betriebsinformationsdaten, über welche sie in Form eines Mesh-Netzwerks (20) miteinander vernetzt sind. Die Steuerungen (16) der Geräte (10) sind außerdem jeweils ausgestaltet, um die empfangenen Betriebsinformationsdaten der anderen Geräte (10) auszuwerten und das wenigstens eine Aggregat (12, 14) in Abhängigkeit von den Betriebsinformationsdaten der anderen Geräte (10) anzusteuern.

## Beschreibung

Die vorliegende Erfindung betrifft eine Anordnung von mehreren gleichartigen technischen Geräten, eine Steuerung für technische Geräte sowie ein Verfahren zum Betreiben mehrerer gleichartiger technischer Geräte.

Es gibt verschiedene Anwendungen, bei denen mehrere gleichartige technische Geräte betrieben werden. Hierzu zählt zum Beispiel eine größere Anzahl an verschiedenen Kühl- und/oder Gefriergeräten zum Beispiel in Supermärkten. Es ist außerdem zum Beispiel im Bereich von Haushaltsgeräten unter der Bezeichnung "Smart Home" bekannt, mehrere technische Geräte an ein Netzwerk anzuschließen und über eine zentrale Steuereinrichtung anzusteuern bzw. zu koordinieren.

Es ist die Aufgabe der Erfindung, Möglichkeiten zum verbesserten Betrieb mehrerer gleichartiger technischer Geräte zu schaffen.

Diese Aufgabe wird gelöst durch die Lehre der unabhängigen Ansprüche. Besonders vorteilhafte Ausgestaltungen und Weiterbildungen der Erfindung sind Gegenstand der abhängigen Ansprüche.

Gemäß einem ersten Aspekt der Erfindung weisen in einer Anordnung von mehreren gleichartigen technischen Geräten, die jeweils wenigstens ein Aggregat und eine Steuerung zum Ansteuern und Überwachen des wenigstens einen Aggregats aufweisen, die Steuerungen der Geräte jeweils eine Schnittstelle zum Senden und Empfangen von Betriebsinformationsdaten auf, wobei die Steuerungen der Geräte über die Schnittstellen in Form eines Mesh-Netzwerks miteinander vernetzt sind und die Steuerungen der Geräte jeweils ausgestaltet sind, um die empfangenen Betriebsinformationsdaten der anderen Geräte auszuwerten und das wenigstens eine Aggregat in Abhängigkeit von den Betriebsinformationsdaten der anderen Geräte anzusteuern.

Gemäß der Erfindung wird vorgeschlagen, mehrere gleichartige technische Geräte miteinander zu vernetzen und jeweils eigenständig unter Berücksichtigung von Betriebsinformationsdaten aller Geräte zu steuern. Auf diese Weise können mehrere gleichartige technische Geräte kollektiv und effektiv betrieben werden. Gemäß der Erfindung bilden die mehreren Geräte mit ihren entsprechend ausgestalteten Steuerungen ein eigenes Netz, sodass auf eine zusätzliche zentrale Steuerung verzichtet werden kann. Gemäß der Erfindung sind die Steuerungen der Geräte in Form eines Mesh-Netzwerks miteinander verbunden, sodass der Austausch der Betriebsinformationsdaten besonders zuverlässig und ohne zentrale Datenverwaltung erfolgen kann. Durch das Auswerten der Betriebsinformationen der mehreren Geräte kann jedes Gerät eine besondere Betriebssituation der gesamten Anordnung erkennen (z.B. großes Kundenaufkommen anhand häufiger Öffnungen der Kühl- und/oder Gefriergeräte in einem Supermarkt) und seinen eigenen Betrieb entsprechend anpassen (z.B. präventives Erhöhen der Kühlleistung, um ein häufiges Öffnen der Gerätetüren auszugleichen).

Unter gleichartigen technischen Geräten werden in diesem Zusammenhang technische Geräte verstanden, die gleiche oder ähnliche Aggregate bzw. Funktionalitäten aufweisen. Bei den gleichartigen technischen Geräten handelt es sich beispielsweise um gleiche oder verschiedene Kühl- und/ oder Gefriergeräte, die jeweils ein Kühlaggregat aufweisen. Eine Anordnung von Kühl- und/oder Gefriergeräten enthält zum Beispiel verschiedene Kühlschränke, Kühltheken, Kühlregale, Gefriertruhen, Kühlräume und dergleichen. Derartige Anordnungen von Kühl- und/oder Gefriergeräten finden sich zum Beispiel in Supermärkten, Lagerhallen, Großküchen, etc.

Die Betriebsinformationsdaten, die zwischen den mehreren Geräten ausgetauscht werden, sollen in diesem Zusammenhang alle Arten von Informationen umfassen, die zum Regeln eines effektiven Betriebs der Geräte benutzt werden können. Es können sowohl Betriebsparameter als auch statistische Auswertungen von Betriebsparametern verwendet werden. Im Fall von Kühl- und/oder Gefriergeräten zählen hierzu beispielsweise ein aktueller Energieverbrauch, eine aktuelle Temperatur im Kühl- bzw. Gefrierraum, eine Beladungsmenge des Kühl- bzw. Gefrierraums, ein aktueller Beleuchtungszustand des Geräts, eine aktuelle Häufigkeit des Öffnens und Schließens einer Gerätetür und dergleichen.

Die Schnittstellen der Steuerungen können in dem Mesh-Netzwerk drahtlos und/oder drahtgebunden miteinander verbunden sein. Die drahtlose Verbindung kann vorzugsweise mittels Bluetooth oder WLAN erfolgen.

In einer Ausgestaltung der Erfindung sind die Steuerungen der Geräte jeweils so ausgestaltet, dass sie das wenigstens eine Aggregat derart ansteuern, dass ein Gesamtenergieverbrauch der Aggregate der mehreren Geräten innerhalb eines vorbestimmten Wertebereichs liegt. Auf diese Weise kann zum Beispiel ein möglichst konstanter Gesamtenergieverbrauch aller Geräte erreicht werden. Im Fall von Kühl- und/oder Gefriergeräten kann zu diesem Zweck insbesondere die Gesamtkühlleistung aller Geräte möglichst konstant gehalten werden. Außerdem können auf diese Weise Energieverbrauchsspitzen für die gesamte Anordnung vermieden werden. Im Fall von Kühl- und/oder Gefriergeräten wird zu diesem Zweck beispielsweise nur eine begrenzte Anzahl an Kühlaggregaten gleichzeitig mit Maximalleistung betrieben.

In einer Ausgestaltung der Erfindung weist das Mesh-Netzwerk zudem ein Gateway zur Kommunikation mit einem externen Netz auf. Auf diese Weise können die Betriebsinformationen der Geräte auch beispielsweise an eine Cloud oder über eine Internetverbindung an eine externe Steuereinrichtung weitergeleitet werden, wodurch Service und Wartungsarbeiten der Geräte vereinfacht werden können.

Gemäß einem zweiten Aspekt der Erfindung weist eine Steuerung für ein technisches Gerät, die ausgestaltet ist zum Ansteuern und Überwachen wenigstens eines Aggregats des Geräts, eine Schnittstelle zum Austauschen von Betriebsinformationsdaten mit anderen gleichartigen technischen Geräten über ein Mesh-Netzwerk auf, wobei die Steuerung so ausgestaltet ist, dass sie die empfangenen Betriebsinformationsdaten der anderen Geräte auswerten und das wenigstens eine Aggregat des Geräts in Abhängigkeit von den Betriebsinformationsdaten der anderen Geräte ansteuern kann.

Mit dieser Steuerung für ein technisches Gerät können die gleichen Vorteile erzielt werden wie mit der oben beschriebenen Anordnung von mehreren gleichartigen technischen Geräten. Bezüglich der Vorteile, Begriffserläuterungen und bevorzugten Ausführungsformen wird daher ergänzend auf die obigen Ausführungen in Zusammenhang mit der erfindungsgemäßen Anordnung von mehreren gleichartigen technischen Geräten verwiesen. Die Schnittstelle der Steuerung kann zur drahtlosen und/oder drahtgebundenen Verbindung in dem Mesh-Netzwerk ausgestaltet sein.

In einer Ausführungsform der Erfindung ist die Steuerung so ausgestaltet, dass sie das wenigstens eine Aggregat des Geräts derart ansteuern kann, dass ein Gesamtenergieverbrauch der Aggregate des Geräts und der anderen Geräte innerhalb eines vorbestimmten Wertebereichs liegt.

Gemäß einem dritten Aspekt der Erfindung ist ein Verfahren zum Betreiben mehrerer gleichartiger technischer Geräte, die jeweils wenigstens ein Aggregat und eine Steuerung zum Ansteuern und Überwachen des wenigstens einen Aggregats aufweisen, vorgesehen, bei dem die Steuerungen der Geräte in Form eines Mesh-Netzwerks miteinander verbunden werden und Betriebsinformationsdaten der Geräte austauschen und jeweils die empfangenen Betriebsinformationsdaten der anderen Geräte auswerten und das wenigstens eine Aggregat in Abhängigkeit von den Betriebsinformationsdaten der anderen Geräte ansteuern.

Mit diesem Betriebsverfahren können die gleichen Vorteile erzielt werden wie mit der oben beschriebenen Anordnung von mehreren gleichartigen technischen Geräten. Bezüglich der Vorteile, Begriffserläuterungen und bevorzugten Ausführungsformen wird daher ergänzend auf die obigen Ausführungen in Zusammenhang mit der erfindungsgemäßen Anordnung von mehreren gleichartigen technischen Geräten verwiesen.

In einer Ausgestaltung der Erfindung steuern die Steuerungen der Geräte das wenigstens eine Aggregat jeweils derart an, dass ein Gesamtenergieverbrauch der Aggregate der mehreren Geräte innerhalb eines vorbestimmten Wertebereichs liegt.

In einer weiteren Ausgestaltung der Erfindung werden die Betriebsinformationen der mehreren Geräte über ein Gateway im Mesh-Netzwerk an ein externes Netz übertragen.

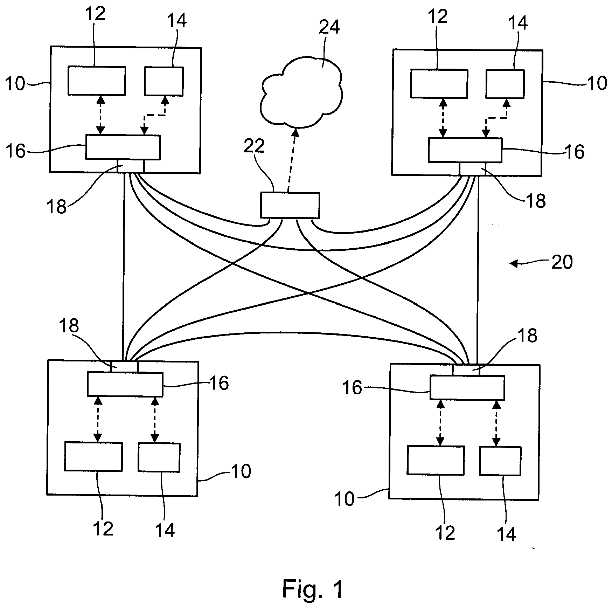

Obige sowie weitere Merkmale und Vorteile der Erfindung werden aus der nachfolgenden Beschreibung eines bevorzugten, nicht-einschränkenden Ausführungsbeispiels anhand der beiliegenden Zeichnung besser verständlich. Darin zeigt die einzige Figur 1 größtenteils schematisch eine Anordnung mehrerer gleichartiger technischer Geräte gemäß einem Ausführungsbeispiel der Erfindung.

Fig. 1 zeigt beispielhaft eine erfindungsgemäße Anordnung von vier Kühl- und/oder Gefriergeräten 10, die zum Beispiel in einem Supermarkt verteilt sind.

Jedes dieser Kühl- und/oder Gefriergeräte 10 weist wenigstens ein erstes Aggregat 12 in Form eines Kühlaggregats und wenigstens ein zweites Aggregat 14 in Form einer Beleuchtung auf. Außerdem enthält jedes der Kühl- und/oder Gefriergeräte 10 eine Steuerung 16 zum Ansteuern und Überwachen der Aggregate 12, 14. Die Anordnung kann gleiche und auch verschiedene Kühl- und/oder Gefriergeräte 10 enthalten, zum Beispiel Kühlschränke, Kühltheken, Kühlregale, Gefriertruhen, Kühlräume und dergleichen.

Die Steuerungen 16 der Kühl- und/oder Gefriergeräte 10 haben jeweils eine Schnittstelle 18 zum Austauschen von Betriebsinformationsdaten. Die Schnittstellen 18 der Steuerungen 16 der mehreren Geräte 10 sind in Form eines Mesh-Netzwerks 20 miteinander verbunden. Vorzugsweise bildet jede Steuerung 16 eines Geräts 18 einen Knoten des Mesh-Netzwerks 20, der mit allen anderen Knoten des Mesh-Netzwerks 20 verbunden ist. Die Verbindung zwischen den Schnittstellen 18 erfolgt im Mesh-Netzwerk 20 drahtlos (z.B. mittels Bluetooth oder WLAN) und/oder drahtgebunden. Es können entweder alle Schnittstellen 18 drahtlos miteinander verbunden sein oder alle Schnittstellen 18 drahtgebunden miteinander verbunden sein oder ein Teil der Schnittstellen 18 drahtlos und ein anderer Teil der Schnittstellen drahtgebunden miteinander verbunden sein. Die Konfiguration des Mesh-Netzwerks 20 stellt einen Datenaustausch über das Netzwerk auch dann sicher, wenn ein Knoten ausfällt.

Die Steuerungen 16 der Kühl- und/oder Gefriergeräte 10 erfassen jeweils Betriebsinformationen dieser Geräte. Hierzu zählen beispielsweise der aktuelle Energieverbrauch der Aggregate 12, 14 und/oder des gesamten Geräts 10, die aktuelle Temperatur im Kühl- bzw. Gefrierraum des Geräts 10, eine Beladungsmenge des Kühl- bzw. Gefrierraums, eine Veränderung bzw. Veränderungshäufigkeit dieser Beladungsmenge, ein aktueller Beleuchtungszustand des Geräts 10, eine aktuelle Häufigkeit des Öffnens und Schließens einer Gerätetür und dergleichen. Die Betriebsinformationen werden dann über die Schnittstelle 18 mittels des Mesh-Netzwerks 20 zu den Steuerungen 16 der anderen Geräte 10 übertragen. Außerdem werten die Steuerungen 16 der Kühl- und/ oder Gefriergeräte 10 sowohl die Betriebsinformationen des eigenen Geräts 10 als auch die über das Mesh-Netzwerk 20 empfangenen Betriebsinformationen der anderen Geräte 10 aus. Auf diese Weise wird ein Kollektiv aus eigenständigen Geräten 10 geschaffen, deren Aggregate 12, 14 unter Berücksichtigung der Betriebsinformationen der anderen Geräte 10 betrieben werden. In vorteilhafter Weise kann so ein Gesamtenergieverbrauch der Aggregate 12, 14 aller Geräte 10 auf einem möglichst konstanten Niveau gehalten werden und können insbesondere Energieverbrauchsspitzen zum Beispiel im Supermarkt, in dem die mehreren Kühl- und/oder Gefriergeräte 10 stehen, vermieden werden. Auch können durch diesen Austausch von Betriebsinformationen spezielle Situationen im Kollektiv erkannt und die Aggregate 12, 14 der Geräte 10 dann entsprechend angesteuert werden. Beispielsweise können die Steuerungen 16 aus einem häufigen Öffnen von Gerätetüren an einem oder mehreren Geräten 10 auf ein hohes Kundenaufkommen schließen und dann die Kühlaggregate 12 aller Geräte 10 präventiv mit einer höheren Kühlleistung betreiben.

Wie in Fig. 1 dargestellt, weist das Mesh-Netzwerk 20 in diesem Ausführungsbeispiel ferner ein Gateway 22 zur Verbindung mit einem externen Netz 24 auf. Das Gateway 22 ist über das Mesh-Netzwerk 20 ebenfalls mit den Steuerungen 16 aller Geräte 10 verbunden und empfängt so auch die Betriebsinformationen aller Geräte 10, sodass diese an ein externes Netz 24 übertragen werden können. Bei dem externen Netz 24 kann es sich zum Beispiel um eine Cloud oder das Internet handeln, auf das eine externe Steuereinrichtung Zugriff haben kann. Auf diese Weise können beispielsweise Service und Wartung der Geräte 10 vereinfacht werden.

Im obigen Ausführungsbeispiel enthält die Anordnung mehrere Kühl- und/oder Gefriergeräte als gleichartige technische Geräte 10. Die Erfindung ist aber auch in Zusammenhang mit anderen technischen Geräten einsetzbar. Die Erfindung ist insbesondere im gewerblichen Bereich anwendbar, wo größere Anzahlen gleichartiger technischer Geräte vorkommen.

### BEZUGSZIFFERNLISTE

- 10: technische Geräte, insbes. Kühl- und/oder Gefriergeräte
- 12: erstes Aggregat, insbes. Kühlaggregat
- 14: zweites Aggregat, insbes. Beleuchtungsaggregat
- 16: Steuerung
- 18: Schnittstelle
- 20: Mesh-Netzwerk
- 22: Gateway
- 24: externes Netz

## Patentansprüche

1. Anordnung von mehreren gleichartigen technischen Geräten (10), die jeweils wenigstens ein Aggregat (12, 14) und eine Steuerung (16) zum Ansteuern und Überwachen des wenigstens einen Aggregats (12, 14) aufweisen, wobei
die Steuerungen (16) der Geräte (10) jeweils eine Schnittstelle (18) zum Senden und Empfangen von Betriebsinformationsdaten aufweisen,
die Steuerungen (16) der Geräte (10) über die Schnittstellen (18) in Form eines Mesh-Netzwerks (20) miteinander vernetzt sind, und
die Steuerungen (16) der Geräte (10) jeweils ausgestaltet sind, um die empfangenen Betriebsinformationsdaten der anderen Geräte (10) auszuwerten und das wenigstens eine Aggregat (12, 14) in Abhängigkeit von den Betriebsinformationsdaten der anderen Geräte (10) anzusteuern.

2. Anordnung von Geräten nach Anspruch 1, bei welcher
die Schnittstellen (18) der Steuerungen (16) in dem Mesh-Netzwerk (20) drahtlos und/oder drahtgebunden miteinander verbunden sind.

3. Anordnung von Geräten nach Anspruch 1 oder 2, bei welcher
die Steuerungen (16) der Geräte (10) jeweils ausgestaltet sind, um das wenigstens eine Aggregat (12, 14) derart anzusteuern, dass ein Gesamtenergieverbrauch der Aggregate (12, 14) der mehreren Geräten (10) innerhalb eines vorbestimmten Wertebereichs liegt.

4. Anordnung von Geräten nach einem der vorhergehenden Ansprüche, bei welcher das Mesh-Netzwerk (20) ein Gateway (22) zur Kommunikation mit einem externen Netz (24) aufweist.

5. Steuerung (16) für ein technisches Gerät (10), ausgestaltet zum Ansteuern und Überwachen wenigstens eines Aggregats (12, 14) des Geräts (10), aufweisend: eine Schnittstelle (18) zum Austauschen von Betriebsinformationsdaten mit anderen gleichartigen technischen Geräten (10) über ein Mesh-Netzwerk (20),
wobei die Steuerung (16) ausgestaltet ist, um die empfangenen Betriebsinformationsdaten der anderen Geräte (10) auszuwerten und das wenigstens eine Aggregat (12, 14) des Geräts (10) in Abhängigkeit von den Betriebsinformationsdaten der anderen Geräte (10) anzusteuern.

6. Steuerung nach Anspruch 5, bei welcher
die Schnittstelle (18) zur drahtlosen und/oder drahtgebundenen Verbindung in dem Mesh-Netzwerk (20) ausgestaltet ist.

7. Steuerung nach Anspruch 5 oder 6, bei welcher
die Steuerung (16) ausgestaltet ist, um das wenigstens eine Aggregat (12, 14) des Geräts (10) derart anzusteuern, dass ein Gesamtenergieverbrauch der Aggregate (12, 14) des Geräts (10) und der anderen Geräte (10) innerhalb eines vorbestimmten Wertebereichs liegt.

8. Verfahren zum Betreiben mehrerer gleichartiger technischer Geräte (10), die jeweils wenigstens ein Aggregat (12, 14) und eine Steuerung (16) zum Ansteuern und Überwachen des wenigstens einen Aggregats (12, 14) aufweisen, wobei die Steuerungen (16) der Geräte (10) in Form eines Mesh-Netzwerks (20) miteinander verbunden werden und Betriebsinformationsdaten der Geräte (10) austauschen, und
die Steuerungen (16) der Geräte (10) jeweils die empfangenen Betriebsinformationsdaten der anderen Geräte (10) auswerten und das wenigstens eine Aggregat (12, 14) in Abhängigkeit von den Betriebsinformationsdaten der anderen Geräte (10) ansteuern.

9. Verfahren nach Anspruch 8, bei welchem
die Steuerungen (16) der Geräte (10) das wenigstens eine Aggregat (12, 14) jeweils derart ansteuern, dass ein Gesamtenergieverbrauch der Aggregate (12, 14) der mehreren Geräte (10) innerhalb eines vorbestimmten Wertebereichs liegt.

10. Verfahren nach Anspruch 8 oder 9, bei welchem
die Betriebsinformationen der mehreren Geräte (10) über ein Gateway (22) im Mesh-Netzwerk (20) an ein externes Netz (24) übertragen werden.
